# FASCICULE DE BREVET EUROPEEN

(11) **EP 2 027 074 B1**
(45) Date de publication et mention de la délivrance du brevet: **14.12.2016**
(21) Numéro de dépôt: 07766111.4
(22) Date de dépôt: 29.05.2007
(51) Int. Cl.: C03B 9/41, C03B 40/027

(54) **GRAISSAGE AUTOMATIQUE DE MOULES POUR LE FORMAGE DE PRODUITS EN VERRE CREUX**
AUTOMATISCHE FORMENSCHMIERUNG FÜR DIE HERSTELLUNG VON HOHLGLAS
AUTOMATIC GREASING OF MOULDS FOR THE FORMING OF HOLLOW GLASS PRODUCTS

(30) Priorité: 29.05.2006 FR 0651928
(43) Date de publication de la demande: 25.02.2009
(73) Titulaire: SAINT-GOBAIN EMBALLAGE, 92400 Courbevoie (FR)
(72) Inventeur: ZANELLA, Evelino, 17043 Carcare (SV) (IT); GHIONE, Samuele, 17058 Dego (SV) (IT)
(74) Mandataire: Saint-Gobain Recherche
(86) Numéro de dépôt international: PCT/FR2007/051343
(87) Numéro de publication internationale: WO 2007/138226

(56) Documents cités:
- EP-A1- 0 120 373
- GB-A- 2 132 188
- US-A- 4 867 777
- US-A- 5 139 560
- US-A- 5 597 396
- US-A- 5 938 806
- PATENT ABSTRACTS OF JAPAN vol. 1997, no. 04, 30 avril 1997 (1997-04-30) -& JP 08 319123 A (YAMAMURA GLASS CO LTD), 3 décembre 1996 (1996-12-03)
- PATENT ABSTRACTS OF JAPAN vol. 1998, no. 09, 31 juillet 1998 (1998-07-31) -& JP 10 087335 A (YAMAMURA GLASS CO LTD), 7 avril 1998 (1998-04-07)

## Description

La présente invention a trait à la fabrication de produits en verre creux, tels que bouteilles, flacons ou pots.

Cette fabrication met en oeuvre des machines I.S. (Individual Section), dans lesquelles chaque section est destinée à traiter une paraison ou plusieurs simultanément, chaque paraison étant reçue et traitée dans un moule ébaucheur, puis un moule finisseur dédiés.

Le moule ébaucheur est constitué de deux demi-moules définissant un plan de joint vertical au début du cycle de fabrication.

Les deux demi-moules se referment sur un moule de bague à l'extrémité inférieure du moule ébaucheur.

Le moule ébaucheur comprend également un poinçon dont le mouvement ascendant produit le perçage de l'ébauche.

Le chargement de la paraison dans le moule ébaucheur est effectué par gravité, par son extrémité supérieure ouverte et surmontée d'un entonnoir.

Dans le procédé pressé-soufflé, ce chargement est effectué en position basse du poinçon. On ferme ensuite l'extrémité supérieure du moule ébaucheur par le fond puis le poinçon effectue un mouvement partant du moule de bague vers le haut, entraînant la paraison avec lui. Après avoir rempli le fond du moule (partie supérieure), le verre traverse les canaux de pressage pour former la bague.

Dans le procédé soufflé-soufflé, le chargement de la paraison est effectué en position haute du poinçon, cependant relativement court. L'extrémité supérieure du moule ébaucheur est reliée à un moyen pour la compression du fond de la paraison, ayant pour effet de former la bague. Puis cette extrémité supérieure est fermée par le fond ébaucheur, le poinçon est descendu et le perçage de l'ébauche est effectué par soufflage.

Le fond ébaucheur, et les deux demi-moules ébaucheurs sont ouverts, et l'ébauche tenue par le moule de bague est transférée dans le moule finisseur par retournement selon un axe horizontal.

Le formage de l'ébauche en produit fini s'accomplit en trois phases :
- allongement de l'ébauche sous son propre poids ;
- gonflage de l'ébauche allongée ;
- extraction de la bouteille.

Une source importante de défauts d'aspect à la surface du produit fini provient du contact relativement violent de la paraison avec la surface de la cavité du moule ébaucheur lors du chargement. Il est nécessaire, pour supprimer ces défauts, de veiller à la qualité de la surface de la cavité, ainsi que du glissement de la paraison sur la surface de la cavité, par des graissages périodiques de celle-ci.

Ces graissages sont normalement effectués par un opérateur au moyen d'une brosse préalablement trempée dans de l'huile. L'opérateur peut procéder à la volée, sans arrêt du fonctionnement normal de la machine I.S., mais des conditions de sécurité plus élevées peuvent prescrire l'éjection des paraisons destinées à la section concernée pendant au moins un cycle de fonctionnement de la machine.

Le graissage des moules ébaucheurs par un opérateur pose plusieurs types de problèmes.

En premier lieu, l'opérateur est soumis à une température élevée et à un bruit important même en utilisant les protections recommandées habituellement. L'exposition à de telles conditions peut être limitée dans le temps par réglementations nationales, par exemple.

De plus, il doit coordonner ses mouvements avec ceux d'éléments mécaniques automatisés, et peut en ressentir rapidement une tension, une fatigue.

D'autre part, l'opérateur graisse les moules périodiquement selon un choix plus ou moins aléatoire, mais ne réserve pas le graissage aux seuls moules qui en ont réellement besoin.

Il s'est avéré d'autre part que la quantité d'huile déposée à la brosse est supérieure à la quantité nécessaire, et que la couche déposée est irrégulière. De plus, l'application à la brosse est relativement complexe et longue, nécessitant par exemple, après trempage dans l'huile, d'éliminer l'excès de cette dernière sur la brosse.

Le document US 4 867 777 décrit la lubrification d'empreintes de moules de fabrication d'articles en verre creux par un dispositif qui n'est pas porté par un robot mobile le long du côté moules ébaucheurs d'une machine I.S.. Le document US 5 597 396 décrit l'utilisation d'un robot qui se déplace d'un moule à un autre.

Les inventeurs se sont donnés pour but la conception d'un nouveau procédé dans lequel une quantité minimale d'huile est déposée en une couche d'épaisseur régulière sur toute la surface de la cavité des moules, et sans intervention physique directe d'un opérateur.

Ce but est atteind par le procédé selon la revendication 1 et par le dispositif correspondant de la revendication 11.

Le graissage du moule en position fermée peut-être réalisé en une opération, c'est-à-dire que le graissage des deux demi-moules séparément est évité. Cependant, dans cette configuration, les inventeurs ont montré la qualité d'un graissage effectué par un outil de pulvérisation en mouvement dans la cavité du moule. Dans le cas de produits en verre creux de type bouteilles présentant un axe de révolution, l'outil de pulvérisation peut consister en une canne dont l'extrémité pulvérise un cône d'huile de 45° par exemple. Mais toutes formes de cannes de pulvérisation peuvent être envisagées en fonction de la forme des moules.

La canne de pulvérisation est reliée à des moyens de commande et pour sa mise en action, qui sont avantageusement à distance, et isolés, de sorte que l'opérateur ne subit plus ni chaleur ni bruit pour graisser les moules.

Selon une première variante, le procédé de l'invention comprend :
- en position refermée des demi-moules sur le moule de bague, l'introduction de la canne de pulvérisation dans la cavité du moule par l'extrémité de celui-ci laissée ouverte par l'absence dudit fond,
- le mouvement de la canne en direction du moule de bague et la pulvérisation simultanée par la canne d'une couche régulière sur toute la surface de la cavité,
- l'ouverture des deux demi-moules,
- éventuellement un recul de la canne vis-à-vis du moule de bague,
- puis la pulvérisation du moule de bague par la canne.

Selon une seconde variante, le procédé comprend :
- en position non refermée des demi-moules sur le moule de bague, le positionnement de la canne de pulvérisation à distance du moule de bague adaptée à sa pulvérisation,
- la pulvérisation du moule de bague par la canne,
- la fermeture des demi-moules sur le moule de bague,
- éventuellement un rapprochement de la canne vis-à-vis du moule de bague,
- puis l'éloignement de la canne vis-à-vis du moule de bague et la pulvérisation simultanée par la canne d'une couche régulière sur toute la surface de la cavité.

Dans une réalisation particulièrement intéressante, le graissage des moules est asservi à un contrôle bout chaud des produits en verre creux. Par bout chaud, on entend communément la phase du procédé dans laquelle les produits sortent des moules finisseurs, juste après leur formage définitif. Un contrôle bout chaud a aussi pour but de repérer des défauts sur le produit formé, notamment sur sa partie correspondant au premier contact de la paraison avec le moule ébaucheur, lors du chargement.

On repère de quel moule provient le produit défectueux, et l'on effectue le graissage de la cavité de ce moule.

Le contrôle bout chaud consiste de préférence en la mesure du rayonnement infrarouge émis par les produits en sortie des moules, établissant une cartographie de la surface des produits.

Le graissage des moules finisseurs selon le procédé de l'invention est envisageable. Cependant, c'est le graissage des moules ébaucheurs, beaucoup plus déterminant comme expliqué ci-dessus relativement au chargement de la paraison, qui est plus particulièrement visé ici.

Selon l'invention, on effectue ainsi de préférence le graissage de moule(s) ébaucheur(s), section après section. Il est possible, notamment, de ne graisser que le ou les moules ébaucheurs d'une section de la machine I.S., correspondant par exemple à un ou des produits évalués comme défectueux par le contrôle bout chaud, puis de traiter les autres sections de la même manière, une par une. Il est également possible d'effectuer les mêmes opérations de graissage en l'absence de tout contrôle bout chaud des produits en verre creux, selon une séquence pré-établie.

Dans une mise en oeuvre avantageuse, on effectue simultanément le graissage de tous les moules ébaucheurs appartenant à une même section d'une machine I.S. au moyen d'un dispositif comprenant autant de cannes de pulvérisation que ladite section comprend de moules ébaucheurs. Le dispositif portant les cannes navigue de section en section.

Des adaptations du cycle de fonctionnement de la section en cours de graissage de la machine I.S. peuvent s'avérer judicieuses. Ainsi, selon d'autres caractéristiques du procédé de l'invention, lorsque l'on effectue le graissage de moule(s) ébaucheur(s) d'une section, en cours de fonctionnement de la machine I.S.,
- la ou les paraison(s) destinée(s) à ce(ces) moule(s) ébaucheur(s) est(sont) éjectée(s), (la cavité de ce ou ces moule(s) reste libre pour l'introduction et la mise en oeuvre de la canne de pulvérisation) ;
- le ou les moule(s) de bague correspondant(s) reste(nt) côté ébaucheur (aucun formage de verre n'ayant lieu pendant ce cycle modifié de graissage, aucun transfert dans le finisseur n'est nécessaire, et le moule de bague est correctement positionné pour le début du prochain cycle de production) ;
- le refroidissement de ce ou ces moule(s) ébaucheur(s) est arrêté.

En ce qui concerne cette dernière adaptation du cycle de fonctionnement de la section en cours de graissage, il est précisé que la température des moules ébaucheurs et des moules de bague est très importante dans la fabrication de produits en verre creux. En effet, il convient que cette température ne soit pas trop élevée, car le poinçon en se rétractant entraîne alors des fils de verre proscrits pour la consommation. C'est pourquoi un circuit de fluide de refroidissement équipe les moules.

Cependant un moule ébaucheur trop froid est source de défauts du produit en verre creux. Ainsi lorsque le graissage a nécessité l'éjection d'une ou plusieurs paraisons par moule ébaucheur, celui-ci peut être trop froid pour une ou plusieurs des premières productions suivantes, de sorte que celles-ci doivent être mises au rebut. C'est pourquoi il est utile d'arrêter le refroidissement du ou des moules ébaucheurs.

De plus, le graissage se faisant à moule fermé selon l'invention, celui-ci se refroidit moins.

Un autre objet de l'invention consiste en un dispositif pour la mise en oeuvre du procédé décrit ci-dessus, comprenant
- une ou plusieurs cannes de pulvérisation simultanée d'un fluide de graissage dans la cavité d'autant de moules ébaucheurs appartenant à une même section d'une machine I.S., chacun de ces moules ébaucheurs ayant à son extrémité inférieure ses deux demi-moules constitutifs en position refermée sur le moule de bague correspondant, son extrémité supérieure n'étant pas bouchée par le fond ébaucheur correspondant,
- des moyens de commande et mise en action de la ou des cannes de pulvérisation,
- et des moyens d'adaptation du cycle de fonctionnement de ladite section d'une machine I.S.,
- la ou lesdites cannes étant portée(s) par un robot mobile le long du côté moules ébaucheurs de ladite machine I.S..

Les moyens d'adaptation du cycle de fonctionnement de la section concernent notamment les modifications suivantes :
- les moules de bague restent côté ébaucheur ;
- les moules finisseurs sont immobilisés en position de début de cycle de production.

Selon des caractéristiques préférées du dispositif de l'invention :
- le robot est monté mobile en translation sur un rail longeant le côté moules ébaucheurs de ladite machine I.S. ;
- le robot est à six axes de déplacement.

Les moyens d'adaptation du cycle de fonctionnement de la section comprennent aussi avantageusement des moyens d'éjection de la ou des paraison(s) destinée(s) au(x) moule(s) ébaucheur(s) en cours de graissage.

De préférence, lesdits moyens de commande et mise en action de la ou des canne(s) de pulvérisation sont reliés à des moyens de détection de défauts du produit après son formage. Ces moyens de détection de défauts consistent opportunément en un contrôle bout chaud des produits, tel que la mesure du rayonnement infrarouge émis par les produits en sortie des moules, comme déjà mentionné ci-dessus. Cette mesure permet de localiser précisément des défauts sur le produit, éventuellement la reproductibilité de certains défauts, et de localiser en conséquence des défauts dans la cavité d'un moule ébaucheur par exemple. La détection de défauts en bout chaud, c'est-à-dire au début de l'obtention du produit, permet d'intervenir sur les moules défectueux par graissage le plus rapidement possible.

Cependant il n'est pas exclu, selon l'invention, de relier les moyens de commande et mise en action de la ou des cannes de pulvérisation à d'autres moyens de détection de défauts du produit, tels que des contrôles bout froid, c'est-à-dire des contrôles automatisés en sortie d'arche de recuisson, relatifs à l'écart par rapport aux dimensions souhaitées (calibre ...), ou à la présence d'une quantité maximale de défauts (glaçures ...).

Le dispositif comprend de préférence un arrêt de sécurité en présence d'un corps à l'intérieur d'une aire déterminée. En effet, le support des cannes de pulvérisation s'adapte au mieux à la machine I.S. en étant monté du côté moules ébaucheurs. Il convient évidemment d'éviter toute collision du support des cannes avec un opérateur ou avec tout élément mécanique. De plus, le dispositif peut être doté d'un mouvement de contrôle de collision d'une haute sensibilité qui en cas d'impact met en marche une alarme et arrête rapidement le robot, en appliquant une décélération de façon à réduire l'effet de l'impact.

L'invention est illustrée à l'aide de l'exemple qui suit, se référant aux dessins en annexe, dans lesquels
- la Figure 1 est une représentation schématique générale du dispositif de graissage selon l'invention, relié à des interfaces utiles à son fonctionnement ;
- la Figure 2 est une représentation schématique plus détaillée des moyens de pulvérisation d'huile de ce dispositif de graissage ;
- et la Figure 3 représente le mode de graissage selon l'invention d'un moule ébaucheur de haut en bas.

### Exemple

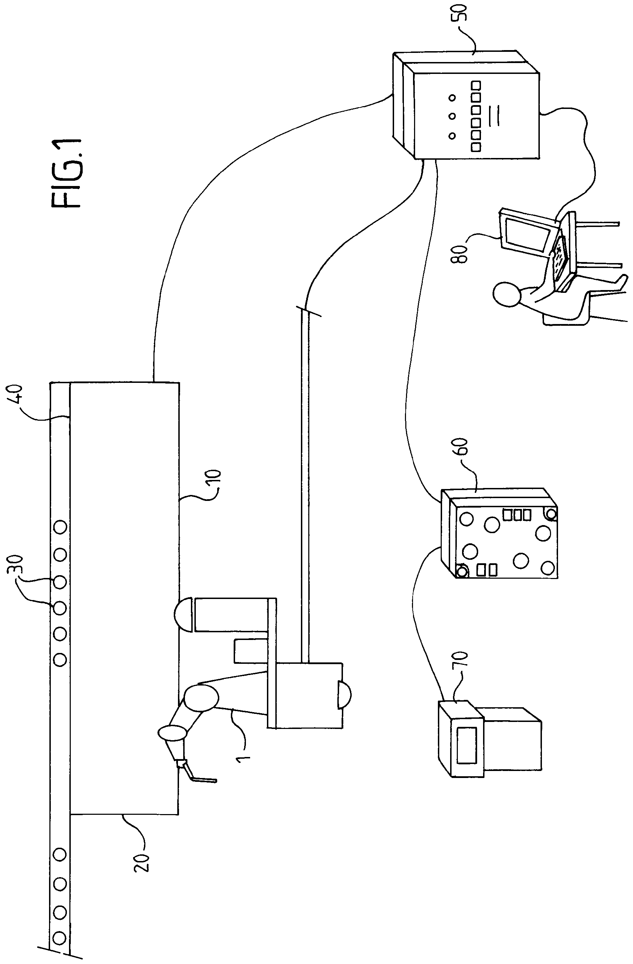

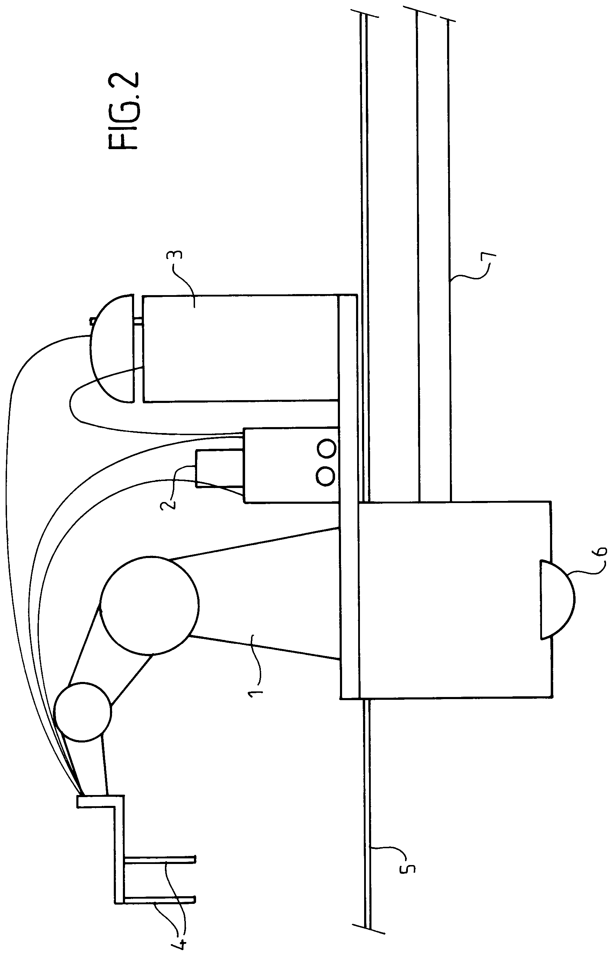

En référence à la Figure 1, un robot 1 à six axes de déplacement porte un outil de graissage éventuellement multiple, décrit plus en détails ci-après en référence à la Figure 2. Le robot 1 est disposé côté moules ébaucheurs 10 d'une machine I.S. 20. Des bouteilles 30 sont produites côté moules finisseurs 40 de la machine I.S. 20.

Une centrale 50 relie le robot 1 à la machine I.S. 20, permettant de commander les séquences d'activité du robot 1 (y compris une alimentation d'air à 5 bar pour la pulvérisation), et d'adapter un ou plusieurs cycles de fonctionnement de la section sur laquelle le robot 1 se trouve en intervention. La centrale 50 reçoit d'autre part de la machine I.S. 20 des informations telles qu'indication de défauts de bouteilles 30, susceptibles de déclencher l'intervention du robot 1 sur la section concernée.

La centrale 50 reçoit également des informations du robot 1 lui-même, telles que proximité d'un corps étranger déclenchant l'adaptation des mouvements ou l'arrêt du robot, ainsi que l'adaptation du fonctionnement de la machine I.S..

La centrale 50 est reliée à une cabine électrique 60 elle-même reliée à un calculateur 70, tous deux étant dédiés aux mouvements du robot.

Enfin la centrale 50 est reliée à un terminal 80 par lequel un opérateur peut examiner mais aussi intervenir sur le fonctionnement de l'ensemble.

En référence à la Figure 2, le robot 1 à six axes de déplacement est monté mobile en translation sur un rail 5 longeant le côté moules ébaucheurs d'une machine I.S. non représentée. Les différents câbles reliés au robot 1 (alimentation électrique, commande des mouvements du robot, alimentation en air comprimé ...) sont réunis sur une chaîne porte-câbles 7 compensant la translation du robot 1.

Le robot 1 est équipé d'un détecteur 6 de corps étranger relié à un arrêt automatique. D'autre part, le bras robot a une fonction automatique de décélération qui réduit l'effet d'un contact éventuel, par exemple en cas de mauvais fonctionnement du détecteur 6.

Le robot 1 comprend un moteur 2 qui en assure la translation.

Il porte un ensemble de deux cannes de pulvérisation 4 adapté à des sections de machines I.S. à double paraison. Les deux cannes 4 sont reliées à un réservoir d'huile 3 et à une alimentation en air à 5 bar.

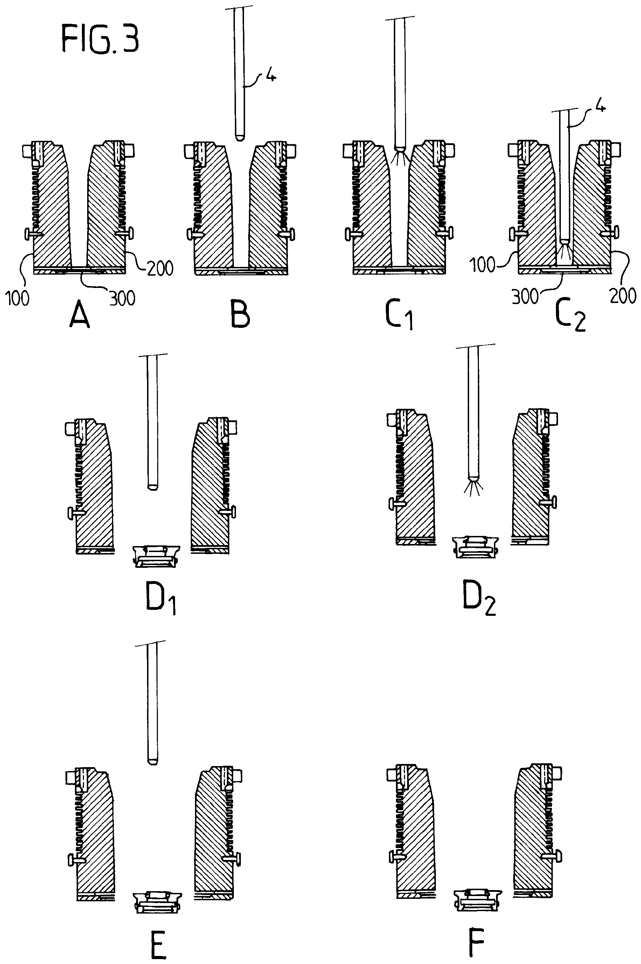

L'activité de chacune des cannes 4 est maintenant décrite en relation avec la Figure 3.

En Figure 3A est représenté un moule ébaucheur en position refermée des demi-moules 100, 200 sur le moule de bague 300, mais en position ouverte de l'extrémité supérieure (absence du fond ébaucheur).

En Figure 3B, une canne de pulvérisation 4 approche de la cavité du moule par le dessus.

En Figure 3 C₁ et C₂, la canne 4 parcourt toute la hauteur de la cavité, avec émission continue par son extrémité d'un cône de pulvérisation d'huile de 45°. Ainsi obtient-on le graissage des parties de la cavité appartenant aux demi-moules 100, 200.

En Figures 3 D₁ et D₂, les demi-moules 100, 200 s'écartent laissant le moule de bague 300 apparent, la canne 4 recule de telle sorte que sa pulvérisation graisse correctement le moule de bague.

En Figures 3 E et F, la canne 4 se retire.

Un cycle normal de production d'article en verre creux peut commencer après fermeture des demi-moules sur le moule de bague et mise en place de l'entonnoir, pour le chargement d'une nouvelle paraison.

Divers modes de graissage de moules ébaucheurs sont essayés sur une machine I.S. de production de bouteilles bordelaises, de section à double paraison.
Mode 1 : opérateur, éjection des paraisons sur deux cycles de fonctionnement de la machine I.S. pour le graissage des moules ébaucheurs, et deux autres cycles pour le graissage des moules de bague.
Mode 2 : opérateur, sans éjection de paraisons pendant le graissage.
Mode 3 : robot tel que décrit ci-dessus, avec remplacement des cannes de pulvérisation par une brosse imprégnée d'une quantité adaptée d'huile, éjection des paraisons sur deux cycles pour le graissage en une opération des moules ébaucheurs et des moules de bague.
Mode 4 : selon l'invention, cannes de pulvérisation, éjection des paraisons sur un cycle pour le graissage des moules ébaucheurs et des moules de bague.

Sont consignés dans le tableau ci-dessous le nombre de produits perdus en fonction du mode de graissage. Les bouteilles rejetées sont les bouteilles défectueuses obtenues après graissage des moules ébaucheurs et/ou des moules de bague. Ces défauts proviennent essentiellement de ce que les moules ébaucheurs et/ou les moules de bague sont alors à trop basse température.

| Mode de graissage | Paraisons éjectées | Bouteilles rejetées | Total |
|---|---|---|---|
| | 4 (2 cycles pour graissage des moules ébaucheurs) | 4 (2 cycles moules ébaucheurs) | |
| 1 | | | 16 |
| | 4 (2 cycles pour graissage des moules de bague) | 4 (2 cycles moules de bague) | |
| | | 4 (2 cycles moules ébaucheurs) | |
| 2 | 0 | | 8 |
| | | 4 (2 cycles moules de bague) | |
| 3 | 4 (2 cycles) | 4 (2 cycles) | 8 |
| 4 | 2 (1 cycle) | 4 (2 cycles) | 6 |

Selon les modes 1 et 2, on différencie les paraisons éjectées et/ou bouteilles rejetées suite au graissage des ébaucheurs d'une part, des moules de bague d'autre part, car les deux graissages sont faits séparément.

Les modes 1 et 2 sont ceux dans lesquels un opérateur doit subir chaleur et bruit.

Dans le mode 3, on obtient l'imprégnation d'une quantité adaptée d'huile par la brosse en la trempant dans un bain d'huile puis en l'en extrayant et en la faisant tourner selon un axe et deux directions opposées de rotation alternativement pour éliminer l'excès d'huile.

C'est le mode de graissage selon l'invention qui permet de perdre le moins de bouteilles produites.

De plus, la quantité d'huile consommée avec les cannes de pulvérisation est environ trois fois inférieure à celle consommée avec un opérateur.

On a d'autre part évalué sur des périodes de production identiques de dix jours sur la même machine I.S. la quantité des bouteilles bordelaises obtenues avec graissage par un opérateur d'une part et graissage selon l'invention d'autre part. Il s'agit d'une évaluation bout froid, c'est-à-dire en sortie d'arche de recuisson, selon les quatre critères suivants :
- défauts d'aspect (tâches d'huile sur la bouteille, pierres dans le verre, bulles ...) ;
- épaisseur du verre (ne doit pas être trop faible au risque de se casser) ;
- calibre = passage du bouchon ;
- glaçure = coupures dans l'épaisseur du verre qui peuvent se former pendant la fabrication, et fragilisent la bouteille.

| | Graissage selon l'invention | Graissage par un opérateur |
|---|---|---|
| Défauts d'aspect | 3,70 | 3,82 |
| Epaisseur verre | 0,05 | 0,15 |
| Calibre | 0,11 | 0,15 |
| Glaçures | 0,23 | 0,37 |

Les résultats sont des pourcentages de bouteilles défectueuses. Ils montrent une légère amélioration de la qualité des produits en bout froid, obtenue par le graissage automatisé selon l'invention.

## Revendications

1. Procédé de fabrication d'un produit en verre creux (30) mettant en oeuvre au moins un moule comprenant deux demi-moules (100, 200) se refermant à une extrémité sur un moule de bague (300), et bouchés à l'autre extrémité par un fond, procédé comprenant un graissage d'au moins un desdits moules en position refermée desdits demi-moules (100, 200) sur ledit moule de bague (300), mais ledit fond ne bouchant par ladite autre extrémité,
et le graissage comprend une pulvérisation par une canne (4) en mouvement dans la cavité du moule, **caractérisé en ce que** la canne (4) est portée par un robot (1) mobile le long du côté moules ébaucheurs d'une machine I.S., et **en ce que** le graissage comprend la pulvérisation du moule de bague (300) par la canne (4) en position ouverte, non refermée sur le moule de bague (300), des demi-moules (100, 200).

2. Procédé selon la revendication 1, **caractérisé en ce qu'**il comprend :
- en position refermée des demi-moules (100, 200) sur le moule de bague (300), l'introduction de la canne de pulvérisation (4) dans la cavité du moule par l'extrémité de celui-ci laissée ouverte par l'absence dudit fond,
- le mouvement de la canne (4) en direction du moule de bague (300) et la pulvérisation simultanée par la canne (4) d'une couche régulière sur toute la surface de la cavité,
- l'ouverture des deux demi-moules (100, 200),
- éventuellement un recul de la canne (4) vis-à-vis du moule de bague (300),
- puis la pulvérisation du moule de bague (300) par la canne (4).

3. Procédé selon la revendication 1, **caractérisé en ce qu'**il comprend :
- en position non refermée des demi-moules (100, 200) sur le moule de bague (300), le positionnement de la canne de pulvérisation (4) à distance du moule de bague (300) adaptée à sa pulvérisation,
- la pulvérisation du moule de bague (300) par la canne (4),
- la fermeture des demi-moules (100, 200) sur le moule de bague (300),
- éventuellement un rapprochement de la canne (4) vis-à-vis du moule de bague (300),
- puis l'éloignement de la canne (4) vis-à-vis du moule de bague (300) et la pulvérisation simultanée par la canne (4) d'une couche régulière sur toute la surface de la cavité.

4. Procédé selon l'une des revendications précédentes, **caractérisé en ce que** le graissage des moules est asservi à un contrôle bout chaud des produits en verre creux.

5. Procédé selon la revendication 4, **caractérisé en ce que** le contrôle bout chaud consiste en la mesure du rayonnement infrarouge émis par les produits (30) en sortie des moules.

6. Procédé selon l'une des revendications précédentes, **caractérisé en ce que** l'on effectue le graissage de moule(s) ébaucheur(s), section après section.

7. Procédé selon l'une des revendications précédentes, **caractérisé en ce que** l'on effectue simultanément le graissage de tous les moules ébaucheurs appartenant à une même section d'une machine I.S. au moyen d'un dispositif comprenant autant de cannes de pulvérisation (4) que ladite section comprend de moules ébaucheurs.

8. Procédé selon la revendication 6, **caractérisé en ce que** lorsque l'on effectue le graissage de moule(s) ébaucheur(s) d'une section, en cours de fonctionnement de la machine I.S., la ou les paraison(s) destinée(s) à ce(ces) moule(s) ébaucheur(s) est(sont) éjectée(s).

9. Procédé selon la revendication 6, **caractérisé en ce que** lorsque l'on effectue le graissage de moule(s) ébaucheur(s) d'une section, en cours de fonctionnement de la machine I.S., le ou les moule(s) de bague correspondant(s) reste(nt) côté ébaucheur.

10. Procédé selon la revendication 6, **caractérisé en ce que** lorsque l'on effectue le graissage de moule(s) ébaucheur(s) d'une section, en cours de fonctionnement de la machine I.S., le refroidissement de ce ou ces moule(s) ébaucheur(s) est arrêté.

11. Dispositif pour la mise en oeuvre du procédé selon l'une des revendications précédentes, comprenant :
- une ou plusieurs cannes (4) de pulvérisation simultanée d'un fluide de graissage dans la cavité d'autant de moules ébaucheurs appartenant à une même section d'une machine I.S., chacun de ces moules ébaucheurs ayant à son extrémité inférieure ses deux demi-moules constitutifs (100, 200) en position refermée sur le moule de bague (300) correspondant, son extrémité supérieure n'étant pas bouchée par le fond ébaucheur correspondant,
- des moyens de commande et mise en action (1, 50, 60, 70, 80) de la ou des cannes de pulvérisation (4),
- et des moyens d'adaptation (50, 80) du cycle de fonctionnement de ladite section d'une machine I.S.,
- la ou lesdites cannes (4) étant portée(s) par un robot (1) mobile le long du côté moules ébaucheurs de ladite machine I.S..

12. Dispositif selon la revendication 11, **caractérisé en ce que** le robot (1) est monté mobile en translation sur un rail (5) longeant le côté moules ébaucheurs de ladite machine I.S..

13. Dispositif selon l'une des revendications 11 ou 12, **caractérisé en ce que** le robot (1) est à six axes de déplacement.

14. Dispositif selon l'une des revendications 11 à 13, **caractérisé en ce que** lesdits moyens d'adaptation (50, 80) comprennent des moyens d'éjection de la ou des paraison(s) destinée(s) au(x) moule(s) ébaucheur(s) en cours de graissage.

15. Dispositif selon l'une des revendications 11 à 14, **caractérisé en ce que** lesdits moyens de commande et mise en action (1, 50, 60, 70, 80) de la ou des canne(s) de pulvérisation (4) sont reliés à des moyens de détection de défauts du produit après son formage.

16. Dispositif selon l'une des revendications 11 à 15, **caractérisé en ce qu'**il comprend un arrêt de sécurité (6) en présence d'un corps à l'intérieur d'une aire déterminée.

## Patentansprüche

1. Verfahren zum Herstellen eines Hohlglaserzeugnisses (30) unter Verwendung mindestens eines Formwerkzeugs, das zwei Halb-Formwerkzeuge (100, 200) umfasst, die sich an einem Ende auf eine Mündungsform (300) schließen und an dem anderen Ende durch einen Boden verschlossen sind, wobei das Verfahren ein Schmieren mindestens eines der Formwerkzeuge in der auf die Mündungsform (300) geschlossenen Stellung der Halb-Formwerkzeuge (100, 200) umfasst, der Boden jedoch nicht über das andere Ende verschließt, und das Schmieren ein Besprühen über ein Rohr (4), das im Hohlraum des Formwerkzeugs in Bewegung ist, umfasst, **dadurch gekennzeichnet, dass** das Rohr (4) von einem Roboter (1) getragen wird, der entlang der Vorformenseite einer IS-Maschine beweglich ist, und dadurch, dass das Schmieren das Besprühen der Mündungsform (300) über das Rohr (4) in geöffneter, nicht auf die Mündungsform (300) geschlossener Stellung der Halb-Formwerkzeuge (100, 200) umfasst.

2. Verfahren nach Anspruch 1, **dadurch gekennzeichnet, dass** es Folgendes umfasst:
- in auf die Mündungsform (300) geschlossener Stellung der Halb-Formwerkzeuge (100, 200) das Einbringen des Sprührohrs (4) in den Hohlraum des Formwerkzeugs über dessen Ende, das durch die Abwesenheit des Bodens offen gelassen ist,
- das Bewegen des Rohrs (4) in Richtung der Mündungsform (300) und das gleichzeitige Versprühen einer gleichmäßigen Schicht auf der gesamten Oberfläche des Hohlraums über das Rohr (4),
- das Öffnen der zwei Halb-Formwerkzeuge (100, 200),
- gegebenenfalls ein Rückziehen des Rohrs (4) gegenüber der Mündungsform (300),
- und dann das Besprühen der Mündungsform (300) über das Rohr (4).

3. Verfahren nach Anspruch 1, **dadurch gekennzeichnet, dass** es Folgendes umfasst:
- in nicht auf die Mündungsform (300) geschlossener Stellung der Halb-Formwerkzeuge (100, 200) das Positionieren des Sprührohrs (4) in Abstand von der Mündungsform (300), der für deren Besprühen angepasst ist,
- das Besprühen der Mündungsform (300) über das Rohr (4),
- das Schließen der Halb-Formwerkzeuge (100, 200) auf die Mündungsform (300),
- gegebenenfalls ein Heranführen des Rohrs (4) gegenüber der Mündungsform (300),
- und dann ein Entfernen des Rohrs (4) gegenüber der Mündungsform (300) und das gleichzeitige Versprühen einer gleichmäßigen Schicht auf der gesamten Oberfläche des Hohlraums über das Rohr (4).

4. Verfahren nach einem der vorhergehenden Ansprüche, **dadurch gekennzeichnet, dass** das Schmieren der Formwerkzeuge durch eine Hot-End-Kontrolle der Hohlglaserzeugnisse geregelt wird.

5. Verfahren nach Anspruch 4, **dadurch gekennzeichnet, dass** die Hot-End-Kontrolle in der Messung der Infrarotstrahlung besteht, die durch die Erzeugnisse (30) am Ausgang der Formwerkzeuge emittiert wird.

6. Verfahren nach einem der vorhergehenden Ansprüche, **dadurch gekennzeichnet, dass** das Schmieren einer bzw. mehrerer Vorform(en) ein Abschnitt nach dem anderen erfolgt.

7. Verfahren nach einem der vorhergehenden Ansprüche, **dadurch gekennzeichnet, dass** gleichzeitig das Schmieren sämtlicher Vorformen, die demselben Abschnitt einer IS-Maschine zugehörig sind, mittels einer Vorrichtung durchgeführt wird, die genauso viele Sprührohre (4) umfasst, wie der Abschnitt Vorformen umfasst.

8. Verfahren nach Anspruch 6, **dadurch gekennzeichnet, dass**, wenn das Schmieren einer bzw. mehrerer Vorform(en) eines Abschnitts im Laufe des Betriebs der IS-Maschine durchgeführt wird, der oder die Vorformling(e), die für diese Vorform(en) bestimmt sind, ausgeworfen wird bzw. werden.

9. Verfahren nach Anspruch 6, **dadurch gekennzeichnet, dass**, wenn das Schmieren einer bzw. mehrerer Vorform(en) eines Abschnitts im Laufe des Betriebs der IS-Maschine durchgeführt wird, der oder die entsprechende(n) Mündungsform(en) auf der Vorformseite bleibt bzw. bleiben.

10. Verfahren nach Anspruch 6, **dadurch gekennzeichnet, dass**, wenn das Schmieren einer bzw. mehrerer Vorform(en) eines Abschnitts im Laufe des Betriebs der IS-Maschine durchgeführt wird, das Abkühlen dieser Vorform(en) gestoppt wird.

11. Vorrichtung zur Durchführung des Verfahrens nach einem der vorhergehenden Ansprüche, umfassend:
- ein oder mehrere Rohr(e) (4) zum gleichzeitigen Versprühen eines Schmierfluids in den Hohlraum so vieler Vorformen, wie einem selben Abschnitt einer IS-Maschine zugehörig sind, wobei jede dieser Vorformen an ihrem unteren Ende ihre zwei Halb-Formwerkzeuge (100, 200), aus denen sie besteht, in auf die Mündungsform (300) geschlossener Stellung hat, wobei ihr oberes Ende nicht durch den entsprechenden Vorformboden verschlossen ist,
- Mittel zum Steuern und Aktivieren (1, 50, 60, 70, 80) des Sprührohrs oder der Sprührohre (4),
- Mittel zum Anpassen (50, 80) des Betriebszyklus des Abschnitts einer IS-Maschine,
- wobei das oder die Rohr(e) (4) von einem Roboter (1) getragen wird bzw. werden, der entlang der Vorformenseite der IS-Maschine beweglich ist.

12. Vorrichtung nach Anspruch 11, **dadurch gekennzeichnet, dass** der Roboter (1) in Translation beweglich auf einer Schiene (5) gelagert ist, die an der Vorformenseite der IS-Maschine entlang führt.

13. Vorrichtung nach einem der Ansprüche 11 oder 12, **dadurch gekennzeichnet, dass** der Roboter (1) sechs Bewegungsachsen hat.

14. Vorrichtung nach einem der Ansprüche 11 bis 13, **dadurch gekennzeichnet, dass** die Anpassungsmittel (50, 80) Mittel zum Auswerfen des Vorformlings oder der Vorformlinge, die für die Vorform(en) bestimmt ist bzw. sind, im Laufe des Schmierens umfassen.

15. Vorrichtung nach einem der Ansprüche 11 bis 14, **dadurch gekennzeichnet, dass** die Mittel zum Steuern und Aktivieren (1, 50, 60, 70, 80) des Sprührohrs oder der Sprührohre (4) mit Mitteln zum Detektieren von Fehlern des Produkts nach seinem Formen verbunden sind.

16. Vorrichtung nach einem der Ansprüche 11 bis 15, **dadurch gekennzeichnet, dass** sie eine Sicherheitsabschaltung (6) in Gegenwart eines Körpers im Inneren einer bestimmten Fläche umfasst.

## Claims

1. A process for manufacturing a hollow glass product (30) employing at least one mold comprising two mold halves (100, 200) closed up at one end on a ring mold (300) and closed off at the other end by a top, which process includes the greasing of at least one of said molds in the closed-up position of said mold halves (100, 200) on said ring mold (300), but said top not closing up said other end, **characterized in that** the greasing includes a spraying by a spray tube (4) moving in the cavity of the mold, and **in that** the spray tube (4) is carried by a robot (1) that can move alongside the blank mold of an IS machine.

2. The process as claimed in claim 1, **characterized in that** it comprises the following:
- when the mold halves (100, 200) are in the closed-up position on the ring mold (300), the spray tube (4) is inserted into the cavity of the mold via that end of the latter left open by the absence of said top;
- the spray tube (4) is moved toward the ring mold (300) and simultaneously sprays a uniform film over the entire surface of the cavity;
- the two mold halves (100, 200) are opened;
- optionally, the spray tube (4) is moved back away from the ring mold (300); and then
- the ring mold (300) is sprayed by the spray tube (4).

3. The process as claimed in claim 1, **characterized in that** it comprises the following:
- when the mold halves (100, 200) are in the nonclosed-up position on the ring mold (300), the spray tube (4) is positioned at a suitable distance from the ring mold (300) for spraying;
- the ring mold (300) is sprayed by the spray tube (4);
- the mold halves (100, 200) are closed up on the ring mold (300);
- optionally, the spray tube (4) is moved closer to the ring mold (300); and then
- the spray tube (4) is moved away from the ring mold (300) and simultaneously sprays a uniform film over the entire surface of the cavity.

4. The process as claimed in one of the preceding claims, **characterized in that** the greasing of the molds is controlled by hot-end monitoring of the hollow glass products.

5. The process as claimed in claim 4, **characterized in that** the hot-end monitoring consists in measuring the infrared radiation emitted by the products (30) leaving the molds.

6. The process as claimed in one of the preceding claims, **characterized in that** the greasing of the blank mold(s) is carried out section by section.

7. The process as claimed in one of the preceding claims, **characterized in that** the greasing of all the blank molds belonging to the same section of an IS machine is carried out simultaneously by means of a device comprising as many spray tubes (4) as said section has blank molds.

8. The process as claimed in claim 6, **characterized in that** when the blank mold(s) of a section is(are) greased during operation of the IS machine, the parison(s) intended for this(these) blank mold(s) is(are) ejected.

9. The process as claimed in claim 6, **characterized in that** when the blank mold(s) of a section is(are) greased during operation of the IS machine, the corresponding ring mold(s) remains(remain) beside the blank mold(s).

10. The process as claimed in claim 6, **characterized in that** when the blank mold(s) of a section is(are) greased during operation of the IS machine, the cooling of this or these blank mold(s) is stopped.

11. A device for implementing the process as claimed in one of the preceding claims, comprising:
- one or more spray tubes (4) for simultaneously spraying a greasing fluid into the cavity of as many blank molds belonging to the same section of an IS machine, each of these blank molds having at its lower end, its two constituent mold halves (100, 200) in the closed-up position on the corresponding ring mold (300), its upper end not being closed off by the corresponding blank mold top;
- means (1, 50, 60, 70, 80) for controlling and actuating the one or more spray tubes (4); and
- means (50, 80) for adapting the operating cycle for said section of an IS machine;
- the one or more spray tubes (4) being carried by a robot (1) that can move alongside the blank molds of said IS machine.

12. The device as claimed in claim 11, **characterized in that** the robot (1) is mounted so as to move translationally on a rail (5) alongside the blank molds of said IS machine.

13. The device as claimed in either of claims 11 and 12, **characterized in that** the robot (1) has six axes of movement.

14. The device as claimed in one of claims 11 to 13, **characterized in that** said adapting means (50, 80) include means for ejecting the parison(s) intended for the blank mold(s) during greasing.

15. The device as claimed in one of claims 11 to 14, **characterized in that** said means (1, 50, 60, 70, 80) for controlling and actuating the one or more spray tubes (4) are connected to means for detecting faults in the product after it has been formed.

16. The device as claimed in one of claims 11 to 15, **characterized in that** it includes a security stop (6) in the presence of a body inside a defined area.
